# EUROPEAN PATENT SPECIFICATION

(11) **EP 0 871 000 B1**
(45) Date of publication and mention of the grant of the patent: **30.01.2002**
(21) Application number: 98106416.5
(22) Date of filing: 07.04.1998
(51) Int. Cl.: F25B 41/06, G05D 23/02, G05D 23/12

(54) **Thermal expansion valve**
Thermisches Entspannungsventil
Robinet détendeur thermique

(30) Priority: 11.04.1997 JP 9357297
(43) Date of publication of application: 14.10.1998
(73) Proprietor: Fujikoki Corporation, Tokyo (JP)
(72) Inventor: Fujimoto, Mitsuya, Setagaya-ku, Tokyo (JP); Watanabe, Kazuhiko, Setagaya-ku, Tokyo (JP); Yano, Masamichi, Setagaya-ku, Tokyo (JP)
(74) Representative: Modiano, Guido, Dr.-Ing.

(56) References cited:
- EP-A- 0 356 642
- EP-A- 0 691 517
- EP-A- 0 836 061
- US-A- 4 344 566

## Description

### BACKGROUND OF THE INVENTION

The present invention relates to a thermal expansion valve used for refrigerating means utilized in refrigeration cycles of air conditioner, refrigeration device and the like.

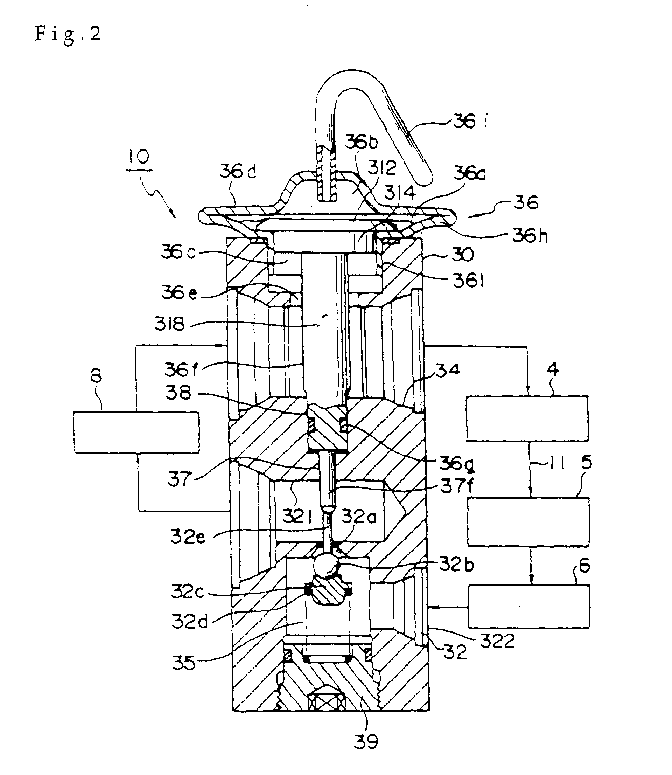

In the prior art, these kinds of thermal expansion valves were used in refrigeration cycles of air conditioners in automobiles and the like. FIG. 2 shows a prior art thermal expansion valve in cross-section together with an explanatory view of the refrigeration cycle. The thermal expansion valve 10 includes a valve body 30 formed of prismatic-shaped aluminum comprising a refrigerant duct 11 of the refrigeration cycle having a first path 32 and a second path 34, the one path placed above the other with a distance in between. The first path 32 is for a liquid-phase refrigerant passing from a refrigerant exit of a condenser 5 and through a receiver 6 to a refrigerant entrance of an evaporator. The second path 34 is for a gas-phase refrigerant passing through the refrigerant exit of the evaporator 8 towards a refrigerant entrance of a compressor 4.

An orifice 32a for the adiabatic expansion of the liquid-phase refrigerant supplied from the refrigerant exit of the receiver 6 is formed on the first path 32, and the first path 32 is connected to the entrance of the evaporator 8 through the orifice 32a and passing the path 321. The orifice 32a comprises a center line along the longitudinal direction of the valve body 30. A valve seat is formed on the entrance of the orifice 32a, and a valve means 32b supported by a valve member 32c and forming a valve structure with the valve seat exists on the valve seat. The valve means 32b and the valve member 32c are fixed together. The valve member 32c is forced by a spring means 32d, for example, a compression coil spring.

The first path 32 where the liquid-phase refrigerant from the receiver 6 is introduced is a path of the liquid refrigerant, and is equipped with an entrance port 322, and a valve chamber 35 connected thereto. The valve chamber 35 is a chamber with a floor portion, which is formed on the same axis as the center line of the orifice 32a, and is sealed by a plug 39.

Further, in order to supply driving force to the valve body 32b according to an exit temperature of the evaporator 8, the valve body 30 is equipped with a small hole 37 and a large hole 38 having a greater diameter than the hole 37 formed on the extended line of said center line axis perforating through the second path 34. A screw hole 361 for fixing a power element member 36 working as a heat sensor is formed on the upper end of the valve body 30.

The power element member 36 comprises a stainless steel diaphragm 36a, an upper cover 36d and a lower cover 36h each defining an upper pressure operation chamber 36b and a lower pressure operation chamber 36c formed so as to contact each other with said diaphragm in between, being divided by said diaphragm forming two sealed chambers above and under the diaphragm 36a, and a tube 36i for enclosing a predetermined refrigerant working as a diaphragm driver liquid into said upper pressure operation chamber, which is fixed to the valve body 30 through a screw 361. Said lower pressure operation chamber 36c is connected to said second path 34 through a pressure hole 36e formed concentric to the center line axis of the orifice 32a. A refrigerant vapor from the evaporator 8 is flown through the second path 34. The second path 34 is a path for the gas-phase refrigerant, and the pressure of said refrigerant vapor is loaded to said lower pressure operation chamber 36c through the pressure hole 36e.

Further, a heat sensing shaft 36f comprising a heat sensing portion 318 exposed inside the path 34 so as to cross said path 34 is formed to contact the diaphragm 36a inside the lower pressure operation chamber 36c and slidably positioned inside the large hole 38 penetrating the second path 34, which not only transmits the exit temperature of the refrigerant of the evaporator 8 to the lower pressure operation chamber 36c, but also provides driving force by sliding inside said large hole 38 in response to the displacement of the diaphragm 36a accompanied by the difference in pressure inside the upper pressure operation chamber 36b and the lower pressure operation chamber 36c. An operation shaft 37f is positioned slidably inside the small hole 37 which presses the valve means 32b against the spring force of the spring means 32d in response to the displacement of the heat sensing shaft 36f. Said heat sensing shaft 36f having the diaphragm 36a contacting to its surface comprises a stopper portion 312 having a large diameter working as a receiving portion of the diaphragm 36a, a large diameter portion 314 slidably inserted inside the lower pressure operation chamber 36c having one end surface contacting to the back surface of the stopper portion 312, and a heat sensing portion 318 having one end surface contacting to the other end surface of said large diameter portion, and the other end surface being connected to the operation shaft 37f.

The heat sensing shaft 36f is further equipped with a ring-shaped sealing member, for example, an O-ring 36g, so as to provide a sealed status between the first path 32 and the second path 34. The heat sensing shaft 36f and the operation shaft 37f are connected to each other, and the operation shaft 37f is in contact with the valve means 32b. Together, the heat sensing shaft 36f and the operation shaft 37f form a rod member which is the valve driving shaft.

In the structure of such thermal expansion valve, a known diaphragm driving liquid is filled inside the upper pressure activating chamber 36b of the upper cover 36d, and the heat of the refrigerant vapor from the refrigerant exit of the evaporator 8 flowing through the second path 34 is transmitted to the diaphragm driving liquid through the second path 34, the heat sensing portion 318 exposed to the pressure hole 36e connected to the second path 34, and the diaphragm 36a.

The diaphragm driving liquid inside the upper pressure operation chamber 36b loads pressure to the upper surface of the diaphragm 36a by turning into gas in correspondence to said heat transmitted thereto. The diaphragm 36a is displaced in the upper or lower direction according to the difference between the pressure of the diaphragm driving gas loaded to the upper surface thereto and the pressure loaded to the lower surface thereto.

The displacement of the center portion of the diaphragm 36a to the upper or lower direction is transmitted to the valve member 32b through the valve member driving shaft and moves the valve member 32b closer to or away from the valve seat of the orifice 32a. As a result, the flow rate of the refrigerant is controlled.

That is, since the temperature of the gas phase refrigerant on the exit side of the evaporator 8 is transmitted to the upper pressure operation chamber 36b, the pressure inside the upper pressure operation chamber 36b changes according to said temperature, and the exit temperature of the evaporator 8 changes. That is, when the heat load of the evaporator is increased, the pressure inside the upper pressure operation chamber 36b rises, and accordingly, the heat sensing shaft 36f or valve member driving shaft is moved to the downward direction and pushes down the valve means 32b, resulting in a wider opening of the orifice 32a. This increases the supply rate of the refrigerant to the evaporator 8, and lowers the temperature of the evaporator 8. In contrast, when the temperature of the evaporator 8 decreases and the heat load of the evaporator is lowered, the valve means 32b is driven in the opposite direction as the explanation above, resulting in a smaller opening of the orifice 32a. The supply rate of the refrigerant to the evaporator decreases, and the temperature of the evaporator 8 rises.

### SUMMARY OF THE INVENTION

In the above-mentioned thermal expansion valve of the prior art, the heat sensing shaft 36f was of a member having a relatively large diameter, for example, approximately 6mm, and this member together with the operation shaft 37f form the rod member, which drives the valve means.

A thermal expansion valve according to the preamble of claim 1 is known from EP-A-863 061 or EP-A-356 642.

However, in the prior art thermal expansion valve, in the attempt to reduce the number of members being used and to reduce the weight, when creating said rod member by forming the heat sensing shaft and the operation shaft as one unit, there is a need to consider the possibility of a buckling occurring to said rod member. When this buckling occurs to said rod member, a problem occurs to the driving movement of the valve means, and by this problem, the control of the flow rate by said expansion valve becomes unstable.

The present invention considers this problem, and aims at providing a thermal expansion valve which is capable of an accurate flow rate control, which prevents the buckling of the rod member having the heat sensing function.

In order to solve the problem, the thermal expansion valve of the present invention comprises a valve means having a first path where a refrigerant flowing toward an evaporator passes, and a second path where the gas-phase refrigerant flowing from the evaporator to the compressor passes, an orifice mounted in the first path, a valve means for controlling the amount of refrigerant passing through said orifice, a power element member mounted on the valve body having a diaphragm being displaced by sensing the temperature of said gas-phase refrigerant, and a stainless steel rod member having a heat sensing function for driving said valve means according to the displacement of the diaphragm, characterized in that when the outer diameter size of the rod member is represented by d, and the overall length of the rod member is represented by L, the rod member is set so that the ratio of L/d is in the range of 17 to 28.

Preferably, the thermal expansion valve of the present invention includes said rod member comprising a heat sensing shaft portion and an operation shaft portion having a smaller diameter than said heat sensing shaft portion, and when the outer diameter size of the rod member of said heat sensing shaft portion is represented by d, and the overall length of said rod member is represented by L, the ratio of L/d is set in the range between 17 to 28.

The thermal expansion valve of the present invention having the structure disclosed above is formed so that the rod member having a heat sensing function for driving the valve means is set to have a small diameter with no buckling occurring to said rod member, so the valve is able to control the flow rate accurately, even with a small diameter.

### BRIEF DESCRIPTION OF THE DRAWINGS

FIG. 1 is a vertical cross-sectional view showing one embodiment of the thermal expansion valve according to the present invention; and
FIG. 2 is a vertical cross-sectional view showing the structure of the thermal expansion valve of the prior art.

### PREFERRED EMBODIMENT OF THE INVENTION

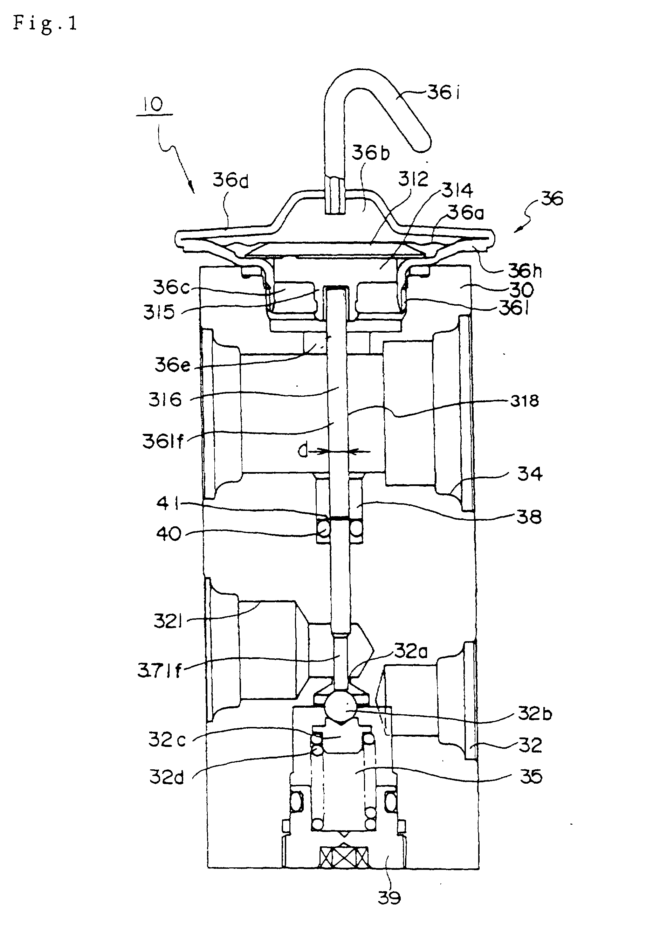

FIG. 1 is a cross-sectional view showing one embodiment of the thermal expansion valve of the present invention omitting the refrigeration cycle, and the members having the same reference numbers as FIG. 2 show either the same or equal portions. However, the structure of the rod member for driving the valve body differs from the expansion valve shown in FIG. 2.

In FIG. 1, the valve body 30 of the thermal expansion valve 10 comprises a first path 32 and a second path 34, and an orifice 32a is mounted in the first path 32. The orifice 32a is controlled of its opening status by a spherical valve means 32b. In between the first path 32 and the second path 34 is formed a hole 38 with large diameter, and a shaft-shaped rod member 316 having a small diameter inserted slidably in said hole 38 transmits the operation of the diaphragm to the valve means 32b.

The heat sensing portion 318 having a heat sensing function comprises a heat sensing shaft 361f, a stopper portion 312 having a large diameter which works as a receiving unit of the diaphragm where said diaphragm 36a contacts the surface thereof, a large diameter portion 314 inserted slidably to the interior of the lower pressure operation chamber 36c having one end surface contacting the back surface of said stopper portion 312 and the center portion of the other end surface formed on a protrusion 315, and a rod member 316 having one end surface fitting to the interior of the protrusion 315 of said large diameter portion 314, and another end surface contacting and connected to said valve means 32b through a portion 371f corresponding to the operation shaft, and forming a unit structure. The heat sensing shaft 361f forming the rod member 316 is exposed inside the second path, where the heat from the refrigerant is transmitted.

Further, in the present embodiment, the valve body 30 utilizes the prior art expansion valve body, and the rod member 316 which comprises the heat sensing shaft 361f could be driven back and forth freely intersecting the path 34 according to the displacement of the diaphragm 36a of the power element member 36, which forms a clearance (gap) connecting the path 321 and the path 34 along the rod portion 316. In order to prevent this connection, an o-ring 40 is positioned inside the hole 38 with large diameter contacting the outer peripheral of the rod portion 316 so that an o-ring exists between the two paths, and a push nut 41 working as a self-locking nut is mounted to the rod portion 316 so as to be positioned inside the large diameter hole 38 contacting to the o-ring 40 so that the o-ring 40 will not be moved by the received power operating towards the longitudinal direction (the direction where the power element member 36 exists) by the coil spring 32d and the refrigerant pressure of the path 321.

Now, the diameter size of the rod member 316 is set as d, and the overall length where the both end portions contact the large diameter portion 314 and the valve means 32b is set as L.

The load added to said rod member 316 in the axial direction is confirmed by experiment to be approximately 7.5Kgf (1Kgf = 9,81 N) at most.

The main function that the rod member 316 must have is to transmit the operation of the diaphragm 36a of the power element to the valve means 32b accurately, to adjust the opening status of the orifice 32a accurately so as to control the flow rate of the liquid-phase refrigerant flowing through the first path 32, and to sense the temperature of the gas-phase refrigerant flowing through the second path 34 at the heat sensing portion 318, and transmit the same to the power element member 36 accurately.

In order to achieve a lighter weight, it is effective to set the diameter size of the heat sensing shaft 361f forming the rod member exposed at the second path 34 as small as possible, but when the diameter size is set too small, there is fear that buckling may occur to the rod member. When buckling happens, a loss occurs to the transmission power from the diaphragm 36a of the power element member, and accurate opening of the valve could no longer be achieved.

According to the refrigerating ability and the style of the piping of an air conditioning device in a car and the like where the expansion valve is connected, the diameter size of the first path 32 and the second path 34, and the distance between the two are limited. From these conditions, a stainless steel is used as the rod member 316, and the length L of said member is set to approximately 50mm. The minimum diameter size of the rod member 316 having a 50mm length size which will show no buckling even when it receives a 7.5Kgf axial load could be calculated from a theory formula of the buckling.

From said theory formula, the minimum diameter size d of the rod member 316 being gained is; d=1.65mm.

If the safety factor is set to 1.4, the practical minimum diameter size could be set to 1.8mm.

The maximum diameter size of the rod member 316 is limited by the projection area of the heat sensing portion 318 in the cross-sectional area of the second path 34.

When it is set to approximately 10% of the diameter size of the second path 34, the diameter size will be approximately 3mm. Having such size, it will not provide a large resistance against the flow of gas-phase refrigerant passing the second path 34.

When expressing the above limited value by the ratio of length size and diameter size, the (length/diameter) will be in the range between 17 to 28.

The above-mentioned embodiment of the present invention shows the case where the rod member 316 comprises a heat sensing shaft 361f portion and an operation shaft 371f having a smaller diameter, forming a path which secures an appropriate and maximum flow rate. The present invention is not limited to such case, but the member 316 could, of course, be formed by a heat sensing shaft 361f portion and an operation shaft 371f portion which are formed continuously and with the same diameter.

According to the thermal expansion valve of the present invention, the operation of the diaphragm of the power element is transmitted to the valve means, and the rod member controlling the flow rate of the liquid-phase refrigerant is formed to have a very small size, but also corresponds to buckling stress. Therefore, a thermal expansion valve which is miniaturized and with a lighter weight could be provided.

Technical features mentioned in any claim are followed by raferende signs. Those reference signs have been included for the sole purpose of increasing the intelligibility of the claims and accordingly, such reference signs do not have any limiting effact on the scope of each element identified by way of example by such reference signs.

## Claims

1. A thermal expansion valve comprising a valve body (30) having a first path (32) where a liquid-phase refrigerant flowing toward an evaporator (8) passes, and a second path (34) where a gas-phase refrigerant flowing from the evaporator (8) to a compressor (4) passes; an orifice (32a) mounted on the first path (32); a valve means (32b) for controlling the amount of refrigerant passing through the orifice (32a); a power element member (36) mounted on the valve body (30) and having a diaphragm (36a) being displaced by sensing the temperature of the gas-phase refrigerant; and a stainless steel rod member (316) having a heat sensing function for driving the valve means (32b) by the displacement of the diaphragm (36a); **characterized in that** when the outer diameter size of the rod member (316) is represented by d, and the overall length of the rod member (316) is represented by L, the ratio of L/d is 17 to 28.

2. The thermal expansion valve of claim 1, **characterized in that** the rod member (316) comprises a heat sensing shaft portion (318) and an operation shaft portion (371f) which has a smaller diameter than the heat sensing shaft portion (318), the valve means (32a) being driven by the heat sensing shaft portion (318) through the operation shaft portion (371f).

## Patentansprüche

1. Ein thermisches Expansionsventil, das folgendes umfasst: einen Ventilkörper (30), der einen ersten Pfad (32) aufweist, durch den ein Flüssigphasen-Kältemittel, das in Richtung eines Verdampfers (8) strömt, hindurchgeht, und einen zweiten Pfad (34), durch den Gasphasen-Kältemittel, das von dem Verdampfer (8) zu einem Kompressor (4) strömt, hindurchgeht; eine Mündung (32a), die in den ersten Pfad (32) eingebaut ist; ein Ventilmittel (32b) zum Steuern der Menge an Kältemittel, das durch die Mündung (32a) hindurchgeht; ein Antriebselementglied (36), das in den Ventilkörper (30) eingebaut ist und das eine Membran (36a) aufweist, die durch das Fühlen der Temperatur des Gasphasen-Kältemittels verschoben wird; und ein Edelstahlstabelement (316), das eine Wärmefühlerfunktion hat, zum Antreiben des Ventilmittels (32b) durch die Verschiebung der Membran (36a); **dadurch gekennzeichnet, dass** wenn das Außendurchmessermaß des Stabgliedes (316) durch d bezeichnet wird und die Gesamtlänge des Stabelementes (316) durch L bezeichnet wird, das Verhältnis von L/d gleich 17 bis 28 ist.

2. Das thermische Expansionsventil gemäß Anspruch 1, **dadurch gekennzeichnet, dass** das Stabglied (316) einen Wärmefühlerschaftabschnitt (318) und einen Arbeitsschaftabschnitt (371f) umfasst, der einen kleineren Durchmesser als der Wärmefühlerschaftabschnitt (318) hat, wobei das Ventilmittel (32a) über den Wärmefühlerschaftabschnitt (318) durch den Arbeitsschaftabschnitt (371f) angetrieben wird.

## Revendications

1. Détendeur thermique comprenant un corps de clapet (30) ayant un premier trajet (32) où passe un fluide frigorigène en phase liquide circulant vers un évaporateur (8), et un deuxième trajet (34) où passe un fluide frigorigène en phase gazeuse circulant de l'évaporateur (8) vers un compresseur (4) ; un orifice (32a) monté sur le premier trajet (32) ; des moyens de vanne (32b) pour commander la quantité de fluide frigorigène passant à travers l'orifice (32a) ; un élément de commande (36) monté sur le corps de clapet (30) et ayant une membrane (36a) qui est déplacée par la détection de la température du fluide frigorigène en phase gazeuse ; et un élément de tige en acier inoxydable (316) ayant une fonction thermosensible pour actionner les moyens de vanne (32b) par le déplacement de la membrane (36a) ; **caractérisé en ce que**, si la dimension du diamètre externe de l'élément de tige (316) est représentée par d, et la longueur hors-tout de l'élément de tige (316) est représentée par L, le rapport de L/d est compris entre 17 et 28.

2. Détendeur thermique selon la revendication 1, **caractérisé en ce que** l'élément de tige (316) comprend une partie d'axe thermosensible (318) et une partie d'axe d'opération (371f) qui a un plus petit diamètre que la partie d'axe thermosensible (318), les moyens de vanne (32a) étant actionnés par la partie d'axe thermosensible (318) par l'intermédiaire de la partie d'axe d'opération (371f).
